# EUROPEAN PATENT SPECIFICATION

(11) **EP 3 552 726 B1**
(45) Date of publication and mention of the grant of the patent: **01.03.2023**
(21) Application number: 17877488.1
(22) Date of filing: 08.12.2017
(51) Int. Cl.: B21C 31/00, B21K 1/02

(54) **HYDRAULIC FORMING MACHINE**
HYDRAULISCHE FORMUNGSMASCHINE
MACHINE DE FORMAGE HYDRAULIQUE

(30) Priority: 09.12.2016 CN 201611132622; 19.09.2017 CN 201710852159
(43) Date of publication of application: 16.10.2019
(73) Proprietor: Xi'an Metalwk Hydraumatic Machinery Co., Ltd., Xi'an, Shaanxi 710065 (CN)
(72) Inventor: CHEN, Shixiong, Xi'an Shaanxi 710065 (CN); WANG, Yanjuan, Xi'an Shaanxi 710065 (CN); WANG, Zhenzhong, Xi'an Shaanxi 710065 (CN); TANG, Shujuanq, Xi'an Shaanxi 710065 (CN); YANG, Jian, Xi'an Shaanxi 710065 (CN); YIN, Chun, Xi'an Shaanxi 710065 (CN); WU, Xiaodong, Xi'an Shaanxi 710065 (CN); WU, Dan, Xi'an Shaanxi 710065 (CN); ZHAO, Jingyun, Xi'an Shaanxi 710065 (CN); LIU, Haiyan, Xi'an Shaanxi 710065 (CN); JI, Xiaohui, Xi'an Shaanxi 710065 (CN)
(74) Representative: Vitina, Maruta
(86) International application number: PCT/CN2017/115306
(87) International publication number: WO 2018/103743

(56) References cited:
- CN-A- 1 396 314
- CN-A- 106 739 124
- CN-A- 107 377 654
- CN-A- 107 617 884
- CN-U- 202 129 625
- JP-A- H09 141 379
- US-A- 1 573 487
- US-A- 1 857 997
- US-A- 1 897 359
- US-A- 4 130 005
- US-A- 5 660 073

## Description

### TECHNICAL FIELD

The present disclosure relates to metal forming equipments, and more particularly to a hydraulic forming machine and a metal ball forming machine.

### BACKGROUND OF THE INVENTION

At present, phosphor copper balls are widely applied to most of the anode materials for electroplating in the electronic circuit board processing industry and the copperplate printing industry. The phosphor copper balls are generally formed by mechanical methods, including mechanical rolling and mechanical press forming.

The copper ball produced by mechanical rolling is generally small in diameter, and coarse and uneven in the internal grain structure, and has a poor compactness and brightness on the surface and a low quality. The rolling yield is about 75-82%, which requires a large number of labors to pick out the defective products on the product line. Meanwhile, the rollers have a short service life and a high cost. The rolling equipment produces large vibration and noise which is out of the limit.

The mechanical press forming adopts mechanical transmission and has a small forming force, such that the specifications of the copper ball products are small. The higher pair transmissions are adopted in transmission mechanism, such that the mechanical wear is serious and the spare parts cost is high. Moreover, the movement mechanism clearance can not be automatically compensated, such that the equipment movement parameters are unstable after the mechanical wear, which results the unstable quality of the copper balls and reduces the yield and the production efficiency. The equipment is jammed or even damaged in severe cases. The press forming equipment has a complex structure and requires extensive maintenance, resulting in high maintenance cost and outage factor. Further, the press forming equipment also produces too much noise and vibration, which is not environment-friendly.

US application No. US5660073A, which forms the basis for the preamble of claim 1, discloses an apparatus and method for forming a ball of relatively small diameter from metal wire and includes a cutoff bar and a slide mechanism for shearing a length of metal wire from the remainder thereof at a first station to provide a blank with which a ball is subsequently formed and for transporting the blank to a second station and also includes a specially-designed punch assembly for forming the blank into a ball at the second station. The punch assembly includes a main slide body and a blank-engaging plunger assembly slidably mounted on the main slide body for sliding movement therealong wherein the plunger which is biased, by air pressure, from a retracted position to an extended position relative to the main slide body. As the plunger assembly is advanced toward the blank at the second station, the air-biased plunger assembly halts momentarily upon engagement with the blank, and it is during this momentary halt in the advancement of the plunger assembly that the cutoff bar and slide mechanism are begun to be moved away from the work axis to out-of-the-way positions accommodating the subsequent pressing of the blank into a ball by the punch assembly without interference from the cutoff bar and slide mechanism. US application No. US4130005A discloses a method and apparatus of cold forming is disclosed for improving die life. During a first phase a workpiece is initially engaged between a pair of dies with a sufficiently low force and velocity level to reduce die errosion but with a sufficiently high level to produce limited deformation of the workpiece and provide an area of mating engagement between the workpiece and the tool and die. During a second phase the workpiece is subjected to substantially higher deforming force and velocity levels and is further deformedto the desired shape. Such area of mating engagement is sufficiently large to reduce errosion producing localized pressures on the tool and die during such second phase. The disclosed machine is a ball header with the movable die mounted directly on the machine frame rather than on the reciprocating slide. The position of the movable die is controlled by a cam driven pusher so that the movable die position is independent of the position of the reciprocating slide. In such machine a workpiece is initially gripped during such first phase while the movement of the tool is controlled by the cam. In the second phase the tool is driven forward by the crank driven slide. US application No. US1573487A discloses a forging machine for forming balls from bars including a main frame, a cross head movable longitudinally of the frame, a side ram movable transversely of the mian frame and the cross head, a breast plate mounted adjacent the forward end of the frame, a stationary die member carried by the breast plate, a second die member carried by the cross head and adopted to co-operate with the first die member to forge balls from pieces of rod stock. US application No. US1897359A discloses a cut-off mechanism of metal swaging machines including a punch, dies and reciprocatory cut-off blade, a backing blade, a reciprocatory bar carrying the backing blade, a bell crank lever engaged with the reciprocatory bar, a yielding slipjoint link connected with the bell crank lever, and a camactuated bell crank lever connected with the yielding slipjoint link and causing movements of the backing blade. US application No. US1857997A discloses a cut-off mechanism for metal heading machines which have bushings through which the stock is fed and punches and dies for shaping the stock. The mechanism includes a cutter blade and a backing blade, a slide with a cam for reciprocating the cutter blade across the feed bushing and toward and from axial line with the punch and die, and a slide with a yielding cam for reciprocating the backing blade across the axial line of punch and die and toward and from the axial line of the feed bushing. The cams cause the blades to come together with a yielding pressure opposite the feed bushin, move together from the bushin toward the axial line of the punch and die and then separate.

### SUMMARY OF THE INVENTION

An object of the present invention is to provide a hydraulic forming machine, which adopts extrusion forming and has the functions of shearing, extrusion, ejecting and receiving, and can directly extrude the blank after being cut. The product quality and production yield can be improved. The service life of tools and molds can be extended, and the costs for replacement and use are reduced. The equipment's operation reliability and continuous operation capability are improved. The failure rate, maintenance workload and skill requirements of workers for maintenance are reduced. The costs of spare parts and maintenance are saved. The noise during operation is reduced and the working environment is improved.

According to the invention this object is achieved by a hydraulic forming machine, including a body, a cutting mechanism, a forming die, an ejector and a driving mechanism. The body is provided with at least one first mounting surface. The forming die includes a movable die and a fixed die matched with the movable die. The ejector includes a first ejecting component arranged at a side of the movable die and a second ejecting component arranged at a side of the fixed die.

The body is provided with a feed inlet penetrating the first mounting surface. The cutting mechanism and the fixed die are provided on the first mounting surface of the body and at two sides of the discharge end of the feed inlet. The movable die is arranged on the driving mechanism and driven by the driving mechanism to move close to or away from the fixed die in a direction perpendicular to the first mounting surface. A blank cut by the cutting mechanism is extruded between the fixed die and the movable die,
the cutting mechanism comprises a cutting drive device, a shear, a clamp and a clamp drive device; the cutting drive device comprises a cutting slide block; wherein,
the clamp is further provided with a swinging pivot and a drive end; the swinging pivot is hinged to an end of the cutting slide block; the shear is arranged on the end of the cutting slide block; the drive end is connected to the clamp drive device; and the clamp is driven by the clamp drive device to reciprocate about the swinging pivot and move with the cutting slide block;
the shear and the clamp are respectively driven by the cutting drive device and the clamp drive device to synchronously move to the centerline between the fixed die and the movable die.

The blank enters through the feed inlet of the body. The blank at the discharge end of the feed inlet is cut by the cutting mechanism on the side of the feed inlet and transported to the fixed die. The movable die moves close to the fixed die under the action of the driving mechanism and extrudes the cut blank by matching with the fixed die to complete an extruding. The movable die moves away from the fixed die under the action of the driving mechanism. At the same time, the first ejecting component and the second ejecting component simultaneously operate to eject the extruded product from between the fixed die and the movable die. The extruded product falls to the receiving device by gravity and is collected by the receiving device, such that a forming is finished.

Optionally, the driving mechanism includes a main hydraulic cylinder. The body is provided with at least one second mounting surface parallel to the first mounting surface. The main hydraulic cylinder is provided on the second mounting surface of the body. An axis of a piston rod of the main hydraulic cylinder is perpendicular to the second mounting surface. An end of the piston rod of the main hydraulic cylinder faces the first mounting surface. The movable die is arranged on the end of the piston rod of the main hydraulic cylinder.

Optionally, the driving mechanism further includes a slide component arranged between the first mounting surface and the second mounting surface. The slide component includes a slide block, a first rail and a second rail. Two sides of the slide block are respectively slidably engaged with the first rail and the second rail. The piston rod of the main hydraulic cylinder is connected to one end of the slide block, the movable die and the first ejecting component are arranged on the other end of the slide block.

Optionally, the body is configured for the mounting of all of the cutting mechanism, the forming die, the ejector, the slide block, and the main hydraulic cylinder.

Optionally, the cutting mechanism includes a cutting die. The shear is provided with a shear blade, and the clamp is provided with a clamping portion.

The cutting die is provided on the first mounting surface and provided with a conveying inlet arranged concentrically with the feed inlet. A processing space is provided at an output end of the conveying inlet. The shear is driven by the cutting drive device to reciprocate in a plane perpendicular to the axis of the conveying inlet, the clamping portion of the clamp is driven by the clamp drive device to move close to or away from the shear blade. The clamping portion of the clamp and the shear blade of the shear are driven by the clamp drive device to clamp the blank in the processing space and synchronously move to a position between the fixed die and the movable die for extruding the blank.

Optionally, the cutting drive device includes a guide mechanism. The guide mechanism is provided on the first mounting surface and at a side of the cutting die. A guiding direction of the guide mechanism is perpendicular to an extending direction of the axis of the conveying inlet. The cutting slide block is slidably engaged with the guide mechanism. The shear is arranged at a side close to the cutting die.

Optionally, the cutting drive device further includes a cutting hydraulic cylinder. An end of the cutting slide block away from the cutting die is connected to a piston rod of the cutting hydraulic cylinder.

Optionally, the hydraulic forming machine further includes a hydraulic control system and an electrical control system.

Optionally, the hydraulic forming machine further includes a receiving device arranged at a side of the first mounting surface and under the fixed die.

The invention has the following beneficial effects. The hydraulic forming machine provided by the present application has the functions of cutting, extrusion forming, ejection and receiving, and can directly extrude the blank after being cut. All the motions can be completed in one time on the hydraulic forming machine.

### BRIEF DESCRIPTION OF THE DRAWINGS

In order to more clearly illustrate the technical solutions of the embodiments of the present invention, the drawings used in the embodiments will be briefly described below. It should be understood that the following drawings only show certain embodiments of the present invention and should not limit the scope. Those skilled in the art can obtain other related figures according to these drawings without any creative work.
FIG. 1 is a schematic diagram showing a hydraulic forming machine according to an embodiment of the present invention.
FIG. 2 is a sectional view taken along A-A of FIG. 1.
FIG. 3 is a sectional view taken along B-B of FIG. 1.
FIG. 4 is a schematic diagram showing a cutting mechanism of the hydraulic forming machine according to an embodiment of the present invention.
FIG. 5 is a schematic diagram showing a cutting mechanism of the hydraulic forming machine according to another embodiment of the present invention.
FIG. 6 is a schematic diagram showing the cutting mechanism of FIG. 4 in feeding.
FIG. 7 is a schematic diagram showing the cutting mechanism of FIG. 4 in which the cutting begins.
FIG. 8 is a schematic diagram showing the cutting mechanism of FIG. 4 in which the cutting ends.
FIG. 9 is a schematic diagram showing the cutting mechanism of FIG. 4 in which the cutting resets.

### Reference numerals:

100, body; 200, cutting mechanism; 300, forming die; 400, ejector; 500, driving mechanism; 101, feed inlet; 102, first mounting surface; 103, second mounting surface; 201, cutting drive device; 202, shear; 203, cutting die; 204, clamp; 205, clamp drive device; 2011, guide mechanism; 2012, cutting slide block; 2013, cutting hydraulic cylinder; 2021, shear blade; 2031, conveying inlet; 2041, clamping portion; 2042, swinging pivot; 2043, drive end; 301, movable die; 302, fixed die; 401, first ejecting component; 402, second ejecting component; 501, main hydraulic cylinder; 502, slide component; 503, slide block; 504, first rail; 505, second rail; 600, receiving device; 700, hydraulic control system; 800, electrical control system.

### DETAILED DESCRIPTION OF EXAMPLES

In order to more clearly illustrate the objects, technical solutions and merits of the embodiments of the present invention, the technical solutions will be clearly and completely described below with reference to the accompanying drawings of the present invention. A part of embodiments rather than all of the embodiments of the invention are described. The components in the embodiments of the invention, which are generally described and illustrated in the drawings herein, may be arranged and designed in various different configurations.

Therefore, the following detailed description of the embodiments of the invention is not intended to limit the claimed protection scope of the present invention, but merely represents selected embodiments of the invention.

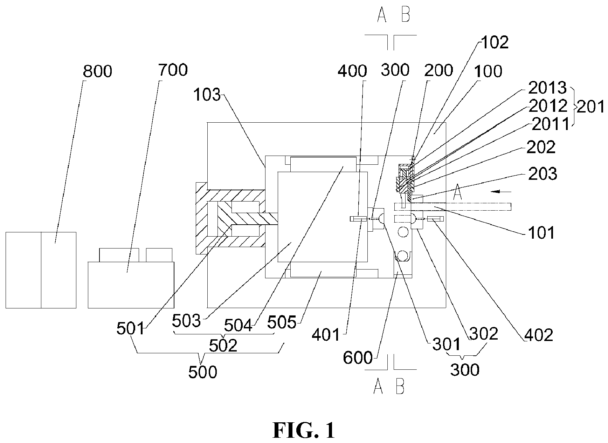

### Embodiment 1 referring to FIGS. 1-9.

The hydraulic forming machine of the present embodiment is used for hydroforming metal balls including copper balls, iron balls, etc. Phosphor copper balls are processed and formed by the hydraulic forming machine in the present embodiment.

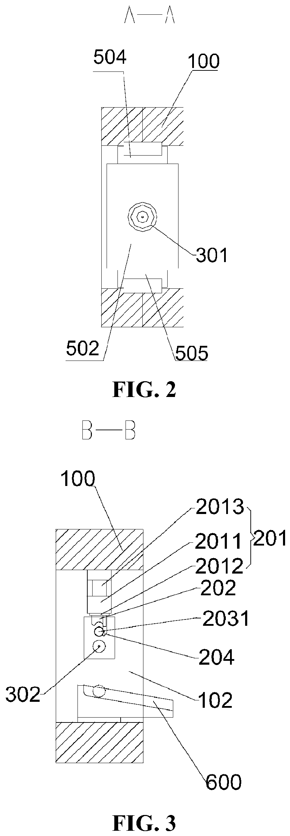

As shown in FIG. 1, the hydraulic forming machine of the present embodiment includes a body 100, a cutting mechanism 200, a forming die 300, an ejector 400, and a driving mechanism 500. The body 100 is provided with at least one first mounting surface 102. As shown in FIGS. 2-3, the forming die 300 includes a movable die 301 and a fixed die 302 matched with the movable die 301. The ejector 400 includes a first ejecting component 401 arranged on a side of the movable die 301 and a second ejecting component 402 arranged at a side of the fixed die 302.

The body 100 is provided with a feed inlet 101 penetrating the first mounting surface 102. The cutting mechanism 200 and the fixed die 302 are provided on the first mounting surface 102 of the body 100 and separately at two sides of a discharge end of the feed inlet 101. The movable die 301 is arranged on the driving mechanism 500. The driving mechanism 500 is able to drive the movable die 301 to move close to or away from the fixed die 302 in a direction perpendicular to the first mounting surface 102. A blank cut by the cutting mechanism 200 enters a space between the fixed die 302 and the movable die 301 for extruding the blank.

The blank enters through the feed inlet 101 of the body 100. The blank at the discharge end of the feed inlet 101 is cut by the cutting mechanism 200 on the side of the feed inlet 101 and transported to the fixed die 302. The movable die 301 moves close to the fixed die 302 under the action of the driving mechanism 500 and extrudes the cut blank by matching with the fixed die 302 to complete an extruding. The movable die 301 moves away from the fixed die 302 under the action of the driving mechanism 500. At the same time, the first ejecting component 401 and the second ejecting component 402 simultaneously operate to eject the extruded product from between the fixed die 302 and the movable die 301. The extruded product falls to the receiving device 600 by gravity and is collected by the receiving device 600, such that a forming is finished.

The cutting motion is completed by the cutting mechanism 200. The extrusion forming motion is completed by the forming die 300. The ejection motion is completed by the ejector 400. The cut blank is directly extruded after the cutting is finished. All the motions are completed at one time on the hydraulic forming machine, thereby simplifying the process and improving product quality and productivity.

It should be noted that: 1. in this embodiment, the body 100 adopts a vertical closed frame structure; 2. the cross-sectional shapes of the blank include a circle, a triangle, a polygon and an irregular shape, and the cross-sectional shape of the blank in the present embodiment is a circle; 3. the product of the present technical solution may be a ball, a cylinder, a long cylinder, a triangular prism, a polygonal prism, an irregular body, and the product in the present embodiment is a ball; 4. "at least one first mounting surface 102" means that it may be arranged one, two or more first mounting surfaces 102, and a plurality of first mounting surfaces 102 are parallel to each other, and the fixed die 302 and the cutting mechanism 200 can be arranged on different first mounting surfaces 102.

As shown in FIG. 1, the driving mechanism 500 includes a main hydraulic cylinder 501. The body 100 is provided with at least one second mounting surface 103 parallel to the first mounting surface 102. The main hydraulic cylinder 501 is provided on the second mounting surface 103 of the body 100. An axial line of a piston rod of the main hydraulic cylinder 501 is perpendicular to the second mounting surface 103. An end of the piston rod of the main hydraulic cylinder 501 faces the first mounting surface 102. The movable die 301 is arranged on the end of the piston rod of the main hydraulic cylinder 501.

The driving mechanism 500 adopts a hydraulic cylinder. When the piston rod of the main hydraulic cylinder 501 reciprocates in a direction perpendicular to the second mounting surface 103, the movable die 301 is driven to move close to or away from the fixed die 302 in the direction perpendicular to the second mounting surface 103. After the blank is cut, it directly enters a space in the centerline of the fixed die 302 and the movable die 301. The movable die 301 moves close to the fixed die 302 to clamp, compress and extrude the blank, realizing hydroforming the product.

It should be noted that "at least one second mounting surface 103" means that one, two or more second mounting surfaces 103 may be arranged, and the plurality of second mounting surfaces 103 are parallel to each other and components arranged on the second mounting surface 103 may be arranged on different second mounting surfaces 103.

As shown in FIG. 1, the driving mechanism 500 further includes a slide component 502 arranged between the first mounting surface 102 and the second mounting surface 103. The slide component 502 includes a slide block 503, a first rail 504, and a second rail 505. Opposite sides of the slide block 503 are respectively slidably engaged with the first rail 504 and the second rail 505. The piston rod of the main hydraulic cylinder 501 is connected to one end of the slide block 503. The movable die 301 and the first ejecting component 401 are arranged on the other end of the slide block 503.

The first rail 504 and the second rail 505 limit the slide block 503 to move only in the direction perpendicular to the second mounting surface 103. The reciprocating movement of the piston rod of the main hydraulic cylinder 501 can drive the slide block 503 to reciprocate along the first rail 504 and the second rail 505, and the slide block 503 drives the movable die 301 to move close to or away from the fixed die 302, thereby completing the extrusion forming of the blank.

As shown in FIG. 1, the body 100 is adapted to mount all of the cutting mechanism 200, the forming die 300, the ejector 400, the slide block 503 and the main hydraulic cylinder 501.

As shown in FIG. 1, the hydraulic forming machine further includes a hydraulic control system 700 and an electrical control system 800.

A cutting hydraulic cylinder 2013 and the main hydraulic cylinder 501 are both driven by the hydraulic control system 700. The hydraulic control system 700 may adopt hydraulic proportional control or hydraulic servo control technology under the required working conditions, which can steplessly adjust the extrusion forming force, the extrusion forming speed, the cutting force and the cutting speed so as to improve the quality of the product. The hydraulic control system 700 is arranged on a side of the body 100 and connected to the cutting hydraulic cylinder 2013 and the main hydraulic cylinder 501 on the body 100 through hydraulic tubing. It should be noted that the electro-hydraulic position closed-loop control technology is adopted in the extrusion forming stroke and the cutting stroke of the hydraulic forming machine.

As shown in FIG. 3, the hydraulic forming machine further includes a receiving device 600 provided on a side of the first mounting surface 102 and under the fixed die 302.

The movable die 301 moves close to the fixed die 302 under the action of the driving mechanism 500 and extrudes the cut blank by matching with the fixed die 302 to complete the processing. The movable die 301 is moved away from the fixed die 302 by the driving mechanism 500. At the same time, the first ejecting component 401 and the second ejecting component 402 simultaneously operate to eject the extruded product from between the fixed die 302 and the movable die 301. The extruded product falls to the receiving device 600 by gravity, such that a forming is finished.

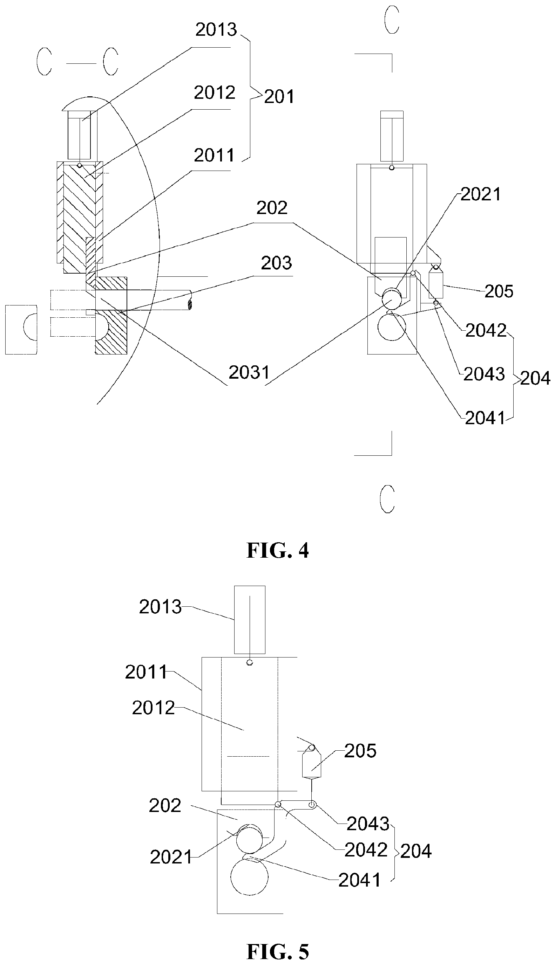

As shown in FIG. 4, the cutting mechanism 200 includes a cutting drive device 201, a shear 202, a cutting die 203, a clamp 204, and a clamp drive device 205. The shear 202 is provided with a shear blade 2021, and the clamp 204 is provided with a clamping portion 2041.

The cutting die 203 is provided on the first mounting surface 102 and provided with a conveying inlet 2031 arranged concentrically with the feed inlet 101. An output end of the conveying inlet 2031 is provided with a processing space. The shear 202 is driven by the cutting drive device 201 to reciprocate in a plane perpendicular to an axis of the conveying inlet 2031. The clamping portion 2041 of the clamp 204 is driven by the clamp drive device 205 to move close to or away from the shear blade 2021. The clamping portion 2041 of the clamp 204 and the shear blade 2021 of the shear 202 are driven by the clamp drive device 205 to clamp the blank in the processing space and synchronously move the blank to the space in the centerline between the fixed die 302 and the movable die 301, and the blank is extruded by the movable die 301.

When the cutting begins, a distance is left between the shear blade 2021 of the shear 202 and the conveying inlet 2031 in a moving direction of the shear 202. The clamping portion 2041 of the clamp 204 is at a position away from the shear blade 2021 of the shear 202. The blank passes through the conveying inlet 2031 from the feed inlet 101 of the body 100 and then enters the processing space and stops when it is moved a distance of a fixed length. The cutting drive device 201 drives the shear 202 to reciprocate and pass through the processing space. When the cutting drive device 201 drives the shear 202 to move toward the processing space, the clamp drive device 205 drives the clamping portion 2041 of the clamp 204 to move close to the shear blade 2021 until the blank is clamped by the shear blade 2021 and the clamping portion 2041. The cutting drive device 201 and the clamp drive device 205 respectively drive the shear 202 and the clamp 204 to synchronously move to the centerline between the fixed die 302 and the movable die 301 and shear the blank during the moving. The movable die 301 moves close to the fixed die 302 under the action of the driving mechanism 500 and extrudes the cut blank by matching with the fixed die 302 to complete the processing.

As shown in FIG. 4, the cutting drive device 201 includes a guide mechanism 2011 and a cutting slide block 2012. The guide mechanism 2011 is provided on the first mounting surface 102 and at a side of the cutting die 203. A guiding direction of the guide mechanism 2011 is perpendicular to an extending direction of the axis of the conveying inlet 2031. The cutting slide block 2012 is slidably engaged with the guide mechanism 2011. The shear 202 is arranged at an end of the cutting slide block 2012 close to the cutting die 203.

The cutting slide block 2012 is slidably arranged on the guide mechanism 2011. The cutting slide block 2012 can only move along the direction perpendicular to the axis of the conveying inlet 2031 under the action of the guide mechanism 2011. The cutting slide block 2012 drives the shear 202 to effectively shear the blank conveyed from the conveying inlet 2031.

As shown in FIG. 4, the cutting drive device 201 further includes a cutting hydraulic cylinder 2013. An end of the cutting slide block 2012 away from the cutting die 203 is connected to the piston rod of the cutting hydraulic cylinder 2013.

The cutting drive device 201 may adopt manners of a hydraulic cylinder driving, an pneumatic cylinder driving, a mechanical driving, an electric-mechanical driving, an electromagnetic driving, a cam lever and spring driving, a blank impact and a spring returning. The present embodiment adopts a hydraulic cylinder driving manner. The piston rod of the cutting hydraulic cylinder 2013 reciprocates and drives the cutting slide block 2012 to reciprocate along the guide mechanism 2011.

As shown in FIG. 4, the clamp 204 is further provided with a swinging pivot 2042 and a drive end 2043. The swinging pivot 2042 is hinged to an end of the cutting slide block 2012 provided with the cutting shear 202. The drive end 2043 is connected to the clamp drive device 205. The clamp drive device 205 drives the clamp 204 to swing around the swing pivot 2042 and moves with the cutting slide block 2012.

The clamp 204 and the shear 202 are arranged at the same end of the cutting slide block 2012. The cutting slide block 2012 reciprocates to drive the shear 202 to reciprocate. The clamping portion 2041 can move close to or away from the shear blade 2021 of the shear 202 when the clamp drive device 205 drives the clamp 204 to reciprocate around the swinging pivot 2042. When the clamping portion 2041 moves close to the shear blade 2021, the clamping portion 2041 together with the shear blade 2021 clamp the blank in the processing space. Then the cutting slide block 2012 drives the shear 202 to move towards the centerline of the movable die 301 and the fixed die 302 while the relative positions of the shear 202 and the clamp 204 are unchanged. The clamp drive device 205 also drives the clamp 204 to move synchronously with the shear 202, and the blank is cut during the movement. The cut blank is placed on the centerline between the fixed die 302 and the movable die 301. The movable die 301 moves close to the fixed die 302 by the driving mechanism 500 and extrudes the cut blank by matching with the fixed die 302 to complete the forming.

It should be noted that the movement of the clamp 204 includes an active open-close mode and a passive open-close mode. The action of clamping and loosening the blank can be achieved as long as the clamping portion 2041 of the clamp 204 can match with the cutting edge 2021. The driving manners of the clamp drive device 205 include a hydraulic cylinder driving, a pneumatic cylinder driving, a mechanical driving, an electric-mechanical driving, an electromagnetic driving, a cam lever and spring driving, a blank impact and a spring returning.

The connecting lines between the swinging pivot 2042, the clamping portion 2041 and the drive end 2043 may be in the same straight line or form a triangle. As shown in FIG. 4, the connecting lines between the swinging pivot 2042, the clamping portion 2041 and the drive end 2043 form a triangle. When the drive end 2043 is driven, the clamping portion 2041 is swung around the oscillating pivot 2042 to achieve the clamping and loosening of the blank, thereby effectively clamping the blank between the shear blade 2021 and the clamping portion 2041.

In this embodiment, two implementation solutions of the positional relationship among the swinging pivot 2042, the clamping portion 2041 and the drive end 2043 are described.

The first implementation solution is shown in FIG. 4, in which the drive end 2043 is arranged between the swinging pivot 2042 and the clamping portion 2041. The second implementation solution is shown in FIG. 5, in which the swinging pivot 2042 is arranged between the clamping portion 2041 and the drive end 2043. The above two implementation solutions form no limitation on the shape of the clamp 204. The structure of the clamp 204 may be various as long as the clamping portion 2041 can match with the shear blade 2021 to clamp and loosen the blank and move synchronously.

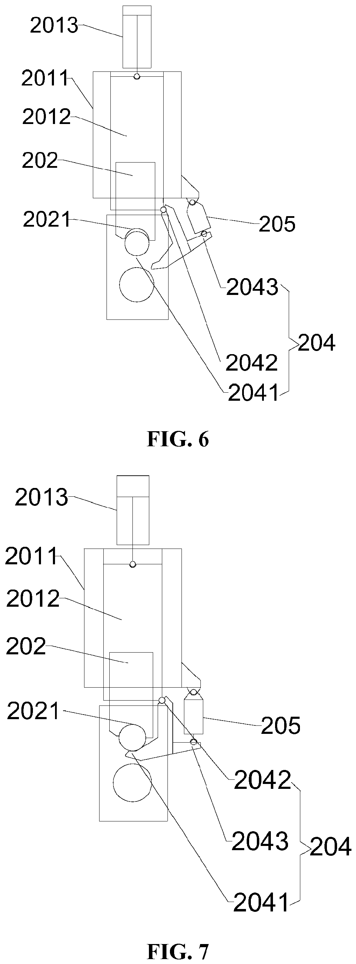

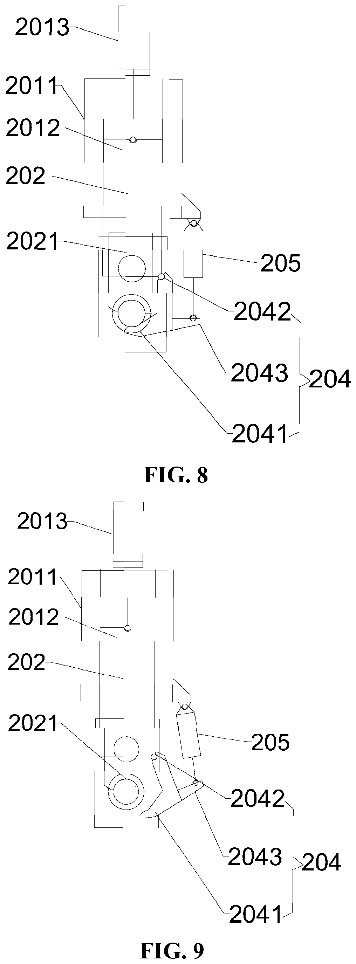

The first implementation solution of the clamp 204 is as follows.
1. Feeding process. As shown in FIG. 6, the clamp 204 is at a release position, that is, away from the position of the cutting blade 2021 of the shear 202. The blank freely enters the conveying inlet 2031 of the cutting die 203 and stops when it moves a distance of a fixed length.
2. Cutting process. As shown in FIGS. 7-8, a chamber without piston-rod of the cutting hydraulic cylinder 2013 is fed oil, and a chamber with piston-rod discharges oil. The slide block 503 of the cutting hydraulic cylinder 2013 drives the shear 202 to move towards the cutting die 203. At the same time, the clamp 204 is swung towards the cutting die 203 and clamps the blank, then moves towards the cutting die 203 together with the shear 202 until the blank is cut. The cut blank is transported from the processing space to the forming centerline between the fixed die 302 and the movable die 301 through clamping by the shear 202 and the clamp 204.
3. Shear return process. As shown in FIG. 9, when the forming die 300 is moved to a certain distance and the blank is clamped in the axial direction, the clamp 204 swings away from the shear blade of the shear 202 to loosen the blank and the blank is clamped in the axial direction, such that it does not fall. At this time, the chamber with piston-rod of the cutting hydraulic cylinder 2013 is fed oil, and the chamber without piston-rod discharges oil. The slide block 503 of the cutting hydraulic cylinder 2013 drives the shear 202 to move away from the shear 202.
4. Forming process. The movable die 301 moves close to the fixed die 302 and matches with the fixed die 302 to extrude the cut blank to complete the forming. The movable die 301 is moved away from the fixed die 302 by the driving mechanism 500. At the same time, the first ejecting component 401 and the second ejecting component 402 simultaneously operate to eject the extruded product from between the fixed die 302 and the movable die 301. The extruded product falls to the receiving device 600 by gravity and is collected by the receiving device 600, such that a processing is finished.
5. The shear 202 sequentially returns, and the clamp 204 returns together with the shear 202 during the forming process. The clamp 204 does not collide with the blank during the returning process. When the clamp 204 passes through the processing space, the blank is fed again. The cutting and forming are continuously performed in sequential cycles.

When the shear 202 are moved to the position of the forming die in the processing space, the blank are fed again. The cutting and forming are continuously performed in sequential cycles.

As shown in FIG. 4, the clamp drive device 205 drives the clamp 204 to reciprocate in a plane perpendicular to the axis of the conveying inlet 2031.

The shear 202 can reciprocate in a plane perpendicular to the axis of the conveying inlet 2031 by the cutting drive device 201. The clamp 204 and the shear 202 can be operated in the same plane. In the present embodiment, preferably, a surface of the clamp 204 close to the shear die 203 is on the same plane as a side of the shear 202 facing the conveying inlet 2031. The plane is perpendicular to the axis of the conveying inlet 2031 of the shear die 203.

In summary, compared to the ball rolling mill and the mechanical ball forging machine, the technical solution of the present embodiment has the following technical advantages.
1. The hydraulic forming machine provided by the present application has the functions of cutting, extrusion forming, ejection and receiving. The cut blank can be directly extruded, and all the processes can be completed in one time on the hydraulic forming machine.
2. The hydraulic transmission is adopted for forming, such that a large hydraulic forming force is achieved. The products have large specifications, wide application range and high quality.
3. The electro-hydraulic position closed-loop control technology is adopted in the extrusion forming stroke and cutting stroke of the hydraulic forming machine, such that the hydraulic forming machine has an accurate movement stroke, good automatic positioning and repeatability, no requirement in manual mechanical adjustment, and can produce products with good appearance consistency, high quality and good appearance.
4. The extruding yield rate is over 99%, which is 17~25% higher than the rolling yield.
5. The hydraulic transmission is adopted. The force transmission parts have self-lubricating function, no mechanical wear, accurate movement track, high equipment reliability, low failure rate and high equipment capacity.
6. The mechanical-electrical-liquid integration automatic control technology is adopted. The hydraulic forming machine has high degree of automation, less labor intensity and low labor costs.
7. The hydraulic forming machine has reasonable functional parameters, small vibration, low noise. The production is safe and meets the green environment-friendly production standard and the environment-friendly requirements of modern enterprises.

### Embodiment 2

The specific implement manner of the microcrystalline copper ball automatic hydraulic forming machine provided by the present embodiment is as follows. The microcrystalline copper ball automatic hydraulic forming machine includes a feed device, a clamping device, a straightening device, a fixed-length feed device, a mainframe, a blank cutting device, a copper ball forming die device, a ball ejector, a slide component, and a hydraulic power device, a ball receiving device, a hydraulic control system and an electric control system. The feed device, clamping device, straightening device, fixed-length feed device and the mainframe are arranged on the same plane foundation. The blank cutting device, copper ball forming die device, ball ejector, slide component, hydraulic power device and the ball receiving device are installed in a frame. The hydraulic control system and electric control system are installed near the mainframe. The main technical feature is that the copper ball is formed by the metal ball forming machine by using a hydraulic power. In an embodiment of the technical solution, the power of the microcrystalline copper ball automatic hydraulic forming machine is provided by a hydraulic control system including a hydraulic pump station, a control valve group, a main hydraulic cylinder, a pipeline. The hydraulic pump station provides hydraulic oil with set pressure and set flow rate. The control valve group controls the main hydraulic cylinder to move according to the set direction and speed by the set program. The movable die of the copper ball forming die device is driven by the piston rod of the main hydraulic cylinder to move towards the fixed die and hydroform the blank. In an embodiment of the technical solution, the hydraulic control system of the microcrystalline copper ball automatic hydraulic forming machine controls or adjusts the forming force. The motions of blank feeding, clamping, straightening, fixed length feeding, blank cutting, forming and ejecting are all controlled by the hydraulic control, hydraulic proportional control or hydraulic servo control technologies. In an embodiment of the technical solution, the forming stroke of the microcrystalline copper ball automatic hydraulic forming machine can be rigidly limited or steplessly adjusted. In an embodiment of the technical solution, the forming force of the microcrystalline copper ball automatic hydraulic forming machine can be adjusted steplessly. The stepless adjustment includes manual stepless adjustment and proportional stepless adjustment. In an embodiment of the technical solution, the frame of the microcrystalline copper ball automatic hydraulic forming machine is a closed frame, an open frame or other form of frame. In an embodiment of the technical solution, the concentricity of the fixed die and the movable die of the copper ball forming die device can be steplessly adjusted within a range of 360°. In an embodiment of the technical solution, the fixed length can be steplessly set and adjust by the fixed-length feed device of the microcrystalline copper ball automatic hydraulic forming machine according to the diameter or volume requirement of the microcrystalline copper ball and the diameter of the blank used. The fixed-length feed device can complete the fixed length feeding motion under the control of the electrical control system and an accurate fixed length can be achieved. In an embodiment of the technical solution, the fixed-length feed device may adopt a fixed length feeding of a linear reciprocating feeding, a swinging reciprocating feeding or an intermittent rotating feeding, which all can steplessly adjust the feed length. In an embodiment of the present technical solution, the linear reciprocating feeding, a swinging reciprocating feeding or an intermittent rotating feeding may be controlled and driven by a mechanical transmission, a hydraulic cylinder, a pneumatic cylinder, a motor reducer, and a servo motor and reducer, a hydraulic or pneumatic motor and other electromagnetic drive manner. In an embodiment of the technical solution, the blank cutting device of the microcrystalline copper ball automatic hydraulic forming machine may adopt a blank shearing manner, a blank sawing manner, blank laser cutting manner, blank plasma cutting manner or other cutting manners. In an embodiment of the present technical solution, the blank shearing manner is completed by a blank shearing device including a fixed shearing die component, a movable shearing die component and a drive device. In an embodiment of the technical solution, in the blank shearing device, the movable shearing die component is driven by the drive device to move relative to the fixed shearing die component in a direction perpendicular to an axis of the fixed shearing die component to cut the copper material blank. In an embodiment of the technical solution, the movable shearing die component is driven by the drive device to twist around the axis of the fixed shearing die component to cut the copper material blank. In an embodiment of the technical solution, the foregoing two manners are combined to cut the copper material blank into segments with a certain weight and volume required to form the copper balls. In an embodiment of the present technical solution, the driving manners of the drive device of the blank shearing device includes hydraulic cylinder driving, pneumatic cylinder driving, electrical motor and mechanical transmission, hydraulic motor and mechanical transmission, and electromagnetic transmission. In an embodiment of the technical solution, the blank sawing manner of the microcrystalline copper ball automatic hydraulic forming machine is completed by a blank sawing device including a sawing device, a clamping conveying mechanism. In an embodiment of the technical solution, the blank sawing manners include circular saw, flat saw, band saw and wire saw manners. The circular saw includes a rack saw and an abrasive disk saw. In an embodiment of the technical solution, the clamping conveying mechanism of the microcrystalline copper ball automatic hydraulic forming machine opens when the fixed length blank is fed and clamps the blank when the sawing is performed. The blank is conveyed to the center of the dies after the sawing is finished by conveying manners of linear motion, rotary motion or oscillating motion. In an embodiment of the technical solution, the fixed die and the movable die of the copper ball forming die device of the microcrystalline copper ball automatic hydraulic forming machine are all provided with an ejector including a hydraulic cylinder, a connecting mechanism and an ejection rod. The ejection rod is driven by the piston rod of the hydraulic cylinder to move outward to realize the ball ejection motion through the connecting mechanism. In an embodiment of the technical solution, the ejector of the microcrystalline copper ball automatic hydraulic forming machine is driven by the driving manners of mechanical transmission, hydraulic transmission, pneumatic transmission and electromagnetic transmission. In an embodiment of the technical solution, the clamping conveying mechanism of the microcrystalline copper ball automatic hydraulic forming machine clamps the blank and moves forward or backward during the feeding process, and releases the blank to complete the clamping and feeding work when the blank enters the fixed-length feed device. In an embodiment of the technical solution, the clamping manner of the clamping device is unidirectional clamping or bidirectional clamping. The driving manners of the clamping motion include mechanical transmission, hydraulic transmission, pneumatic transmission and electromagnetic transmission. In an embodiment of the technical solution, the microcrystalline copper ball automatic hydraulic forming machine adopts a mechanical, electrical, hydraulic and intelligent control mechanical-electrical-liquid integration fully automatic control technology to realize the automatic control and coordinated operation of the whole production process such as feeding, clamping and straightening, blank cutting, forming, ball ejection so as to achieve the purpose of fully automatic production of microcrystalline copper balls. In an embodiment of the technical solution, the microcrystalline copper ball automatic hydraulic forming machine adopts ethernet technology to timely collect and transmit dynamic production data and information, thereby realizing automatic control and intelligent management of microcrystalline copper ball forming production. In an embodiment of the present technical solution, the copper material blank used in the feed device of the microcrystalline copper ball automatic hydraulic forming machine is a coiled copper material blank or a straight copper material blank. In an embodiment of the present technical solution, the copper material blank is a coiled copper material blank. The feed device includes a decoiling device and a pinch device. Each coiled copper material blank is continuously decoiled and pinched to the straightening device for continuously straightening, making it a copper material blank having sufficient straightness for feeding by the fixed-length feed device. In an embodiment of the technical solution, the copper material blank is a straight copper material blank. The feed device includes a storage platform, a material distributing mechanism, a traverse mechanism, a conveying mechanism, a pinch device. Each straight copper material blank is distributed, traversed, conveyed, and pinched to the straightening device by the feed device. Then each copper material blank is straightened to become a copper material blank with sufficient straightness for feeding by the fixed-length feed device. In an embodiment of the technical solution, the straightening device of the microcrystalline copper ball automatic hydraulic forming machine adopts a two-rollers or multi-rollers straightening manner. The straightening rollers may adopt an active straightening manner and a passive straightening manner. The active straightening manner is that the straightening rollers are driven by the drive device to straighten the copper material blank. The passive straightening manner is that the copper material blank moving forward drives the straightening rollers to rotate and then is straighten by the straightening rollers. In an embodiment of the technical solution, the driving manners of the drive device in the straightening device include motor reducer mechanical transmission, hydraulic motor mechanical transmission, pneumatic motor mechanical transmission and electromagnetic transmission. In an embodiment of the present technical solution, the copper material blank is a coiled copper material blank and placed on the decoiling device. Each coiled copper material blank is continuously decoil by the decoiling device and pinched to the straightening device through the pinch device for continuous straightening, making it a copper material blank with sufficient straightness for feeding by the fixed-length feed device. In an embodiment of the technical solution, the copper material blank is a straight copper material blank and placed on the storage platform. Each straight copper material blank is respectively transported to the traverse mechanism by the material distributing mechanism, traversed to the conveying mechanism by the traverse mechanism, conveyed to the pinch device by the conveying mechanism and pinched to the straightening device by the pinch device for continuous straightening, making it a copper material blank with sufficient straightness for feeding by the fixed-length feed device. In an embodiment of the present technical solution, the copper material blank is fed to the blank cutting device by the fixed-length feed device according to the set blank length and cut by the blank cutting device by a shearing manner or a sawing manner. The copper material blank of the fixed length is clamped to the center of the copper ball forming die device by the clamping conveying mechanism. In an embodiment of the technical solution, the electric control system controls the hydraulic pump station to provide hydraulic oil having a set pressure and flow rate. The control valve group controls the main hydraulic cylinder to operate according to the set direction and speed by the set program. The slide component is driven by the piston rod of the main hydraulic cylinder to drive the movable die of the copper ball forming die device to move towards the fixed die, such that the copper material blank of the fixed length is hydroformed. In an embodiment of the technical solution, the movable die is driven by the main hydraulic cylinder to return to the initial position after the forming of the copper ball is finished. A left ball ejector and right ball ejector simultaneously eject during the returning process of the movable die, and the copper ball falls into the receiving device and is then collected to complete a copper ball forming. In an embodiment of the technical solution, the microcrystalline copper ball automatic hydraulic forming machine includes the hydraulic power device, the ball receiving device, the hydraulic control system, the electric control system. The feed device, clamping device, straightening device, fixed-length feed device and the mainframe are arranged on the same plane foundation. The blank cutting device, copper ball forming die device, ball ejector, slide component, hydraulic power device and the ball receiving device are installed in the frame. The hydraulic control system and the electric control system are installed in the control cabinet. The main technical feature is that the microcrystalline copper ball is formed by a hydraulic power. Compared to the existing copper ball forming technology and equipment, the technical solution has the following advantages. The hydraulic transmission is adopted for forming, such that a large hydraulic forming force is achieved. The products have large specifications, a high quality, a compact core structure and a smooth appearance. The microcrystalline copper balls are the high-end products. The main hydraulic cylinder is used for providing the power, such that the forming force of the copper ball can be adjusted steplessly and the copper ball products have wide specifications. The displacement sensor is used to detect the forming stroke, such that the forming stroke is controlled accurately and can be adjusted steplessly. The annular stripes on product can be evenly controlled and the product has a smooth appearance. The center of the movable die of the copper ball forming die device can be steplessly adjusted within a range of 360°. The concentricity of the fixed die and the movable die is accurate. The dies have a good stress state and a long service life. The product has a round and normal appearance. The fixed length of the blank can be set and adjusted steplessly. The fixed length feeding motion is completed under the control of the electric control system, such that the fixed length of the blank is accurate and the quality of the copper ball product is uniform. The hydraulic control system adopts proportional servo control technology, which can conveniently adjust the hydraulic forming force, forming speed and forming stroke by PLC according to the specification of the product, so that the equipment resources can be reasonably used and the equipment capacity can be optimally used. The mechanical-electrical-liquid integration automatic control technology is adopted. The hydraulic forming machine has high degree of automation, high product quality, high extruding yield, safe and reliable operation, low production cost and high equipment capacity. The ethernet technology is adopted to collect and transmit dynamic production information in time to realize automatic control and intelligent management of microcrystalline copper ball forming production. The technical solution has novel principles, advanced technology, intelligent management, reasonable structure, reliable operation, high automation level, high equipment productivity and environment-friendly and the products are high-end.

The above are only the preferred embodiments of the present invention and are not intended to limit the present invention. Various modifications and changes can be made to the present invention by those skilled in the art as long as they fall under the scope of the invention as defined by the appended claims.

## Claims

1. A hydraulic forming machine, comprising: a body (100), a cutting mechanism (200), a forming die (300), an ejector (400), and a driving mechanism (500); the body (100) is provided with at least one first mounting surface (102); the forming die (300) comprises a movable die (301) and a fixed die (302) matched with each other; the ejector (400) comprises a first ejecting component (401) arranged at a side of the movable die (301) and a second ejecting component (402) arranged at a side of the fixed die (302);
the body (100) is provided with a feed inlet (101) penetrating the first mounting surface (102); the cutting mechanism (200) and the fixed die (302) are provided on the first mounting surface (102) of the body (100) and respectively at two sides of the discharge end of the feed inlet (101); the movable die (301) is arranged on the driving mechanism (500) and driven by the driving mechanism (500) to move close to or away from the fixed die (302) in a direction perpendicular to the first mounting surface (102); a blank cut by the cutting mechanism (200) is extruded between the fixed die (302) and the movable die (301);
the cutting mechanism (200) comprises a cutting drive device (201), a shear (202), a clamp (204) and a clamp drive device (205); the cutting drive device (201) comprises a cutting slide block (2012); **characterized in that**
the clamp (204) is further provided with a swinging pivot (2042) and a drive end (2043); the swinging pivot (2042) is hinged to an end of the cutting slide block (2012); the shear (202) is arranged on the end of the cutting slide block (2012); the drive end (2043) is connected to the clamp drive device (205); and the clamp (204) is driven by the clamp drive device (205) to reciprocate about the swinging pivot (2042) and move with the cutting slide block (2012);
the shear (202) and the clamp (204) are respectively driven by the cutting drive device (201) and the clamp drive device (205) to synchronously move to the centerline between the fixed die (302) and the movable die (301).

2. The hydraulic forming machine according to claim 1, **characterized in that** the driving mechanism (500) comprises a main hydraulic cylinder (501); the body (100) is provided with at least one second mounting surface (103) parallel to the first mounting surface (102); the main hydraulic cylinder (501) is provided on the second mounting surface (103) of the body (100); an axis of a piston rod of the main hydraulic cylinder (501) is perpendicular to the second mounting surface (103); an end of the piston rod of the main hydraulic cylinder (501) faces the first mounting surface (102); the movable die (301) is arranged on the end of the piston rod of the main hydraulic cylinder (501).

3. The hydraulic forming machine according to claim 2, **characterized in that** the driving mechanism (500) further comprises a slide component (502) arranged between the first mounting surface (102) and the second mounting surface (103); the slide component (502) comprises a slide block (503), a first rail (504) and a second rail (505); two sides of the slide block (503) are respectively slidably engaged with the first rail (504) and the second rail (505); and the piston rod of the main hydraulic cylinder (501) is connected to one end of the slide block (503), the movable die (301) and the first ejecting component (401) are arranged on the other end of the slide block (503).

4. The hydraulic forming machine according to claim 3, **characterized in that** the body (100) is configured for the mounting of all of the cutting mechanism (200), the forming die (300), the ejector (400), the slide block (503) and the main hydraulic cylinder (501).

5. The hydraulic forming machine according to any one of claims 1 to 4, **characterized in that** the cutting mechanism (200) further comprises a cutting die (203); the shear (202) is provided with a shear blade (2021), and the clamp (204) is provided with a clamping portion (2041);
the cutting die (203) is provided on the first mounting surface (102) and provided with a conveying inlet (2031) arranged concentrically with the feed inlet (101); a processing space is provided at an output end of the conveying inlet (2031); the shear (202) is driven by the cutting drive device (201) to reciprocate in a plane perpendicular to an axis of the conveying inlet (2031), the clamping portion (2041) of the clamp (204) is driven by the clamp drive device (205) to move close to or away from the shear blade (2021); the clamping portion (2041) of the clamp (204) and the shear blade (2021) of the shear (202) are driven by the clamp drive device (205) to clamp the blank in the processing space and synchronously move to a position between the fixed die (302) and the movable die (301) for extruding the blank.

6. The hydraulic forming machine according to claim 5, **characterized in that** the cutting drive device (201) further comprises a guide mechanism (2011); the guide mechanism (2011) is provided on the first mounting surface (102) and at a side of the cutting die (203); a guiding direction of the guide mechanism (2011) is perpendicular to an extending direction of the axis of the conveying inlet (2031); the cutting slide block (2012) is slidably engaged with the guide mechanism (2011); and the shear (202) is arranged at a side of the cutting slide block (2012) close to the cutting die (203).

7. The hydraulic forming machine according to claim 6, **characterized in that** the cutting drive device (201) further comprises a cutting hydraulic cylinder (2013); and an end of the cutting slide block (2012) away from the cutting die (203) is connected to a piston rod of the cutting hydraulic cylinder (2013).

8. The hydraulic forming machine according to claim 1, **characterized in that** the hydraulic forming machine further comprises a hydraulic control system (700) and an electrical control system (800).

## Patentansprüche

1. Hydraulische Formmaschine, umfassend einen Körper (100), einen Schneidmechanismus (200), ein Formwerkzeug (300), einen Ausstoßer (400) und einen Antriebsmechanismus (500); wobei der Körper (100) mit mindestens einer ersten Montagefläche (102) versehen ist; und wobei das Formwerkzeug (300) ein bewegliches Werkzeug (301) und ein festes Werkzeug (302), die aufeinander abgestimmt sind; und wobei der Ausstoßer (400) eine auf einer Seite des beweglichen Werkzeugs (301) angeordnete erste Ausstoßkomponente (401) und eine auf einer Seite des festen Werkzeugs (302) angeordnete zweite Ausstoßkomponente (402) umfasst;
und wobei der Körper (100) mit einem Zufuhreinlass (101) versehen ist, der die erste Montagefläche (102) durchdringt; und wobei der Schneidmechanismus (200) und das feste Werkzeug (302) an der ersten Montagefläche (102) des Körpers (100) und jeweils auf zwei Seiten des Auslassendes des Zufuhreinlasses (101) vorgesehen sind; und wobei das bewegliche Werkzeug (301) an dem Antriebsmechanismus (500) angeordnet ist und durch den Antriebsmechanismus (500) dazu angetrieben wird, sich in einer Richtung senkrecht zu der ersten Montagefläche (102) nahe an das feste Werkzeug (302) heranzubewegen oder von diesem wegzubewegen; und wobei ein durch den Schneidmechanismus (200) geschnittener Rohling zwischen dem festen Werkzeug (302) und dem beweglichen Werkzeug (301) extrudiert wird;
und wobei der Schneidmechanismus (200) eine Schneidantriebsvorrichtung (201), eine Schere (202), eine Klemme (204) und eine Klemmenantriebsvorrichtung (205) umfasst; und wobei die Schneidantriebsvorrichtung (201) einen Schneidgleitblock (2012) umfasst; **dadurch gekennzeichnet, dass**
die Klemme (204) weiterhin mit einem Schwenkzapfen (2042) und einem Antriebsende (2043) versehen ist; wobei der Schwenkzapfen (2042) an einem Ende des Schneidgleitblocks (2012) angelenkt ist; und wobei die Schere (202) an dem Ende des Schneidgleitblocks (2012) angeordnet ist; und wobei das Antriebsende (2043) mit der Klemmenantriebsvorrichtung (205) verbunden ist; und wobei die Klemme (204) durch die Klemmenantriebsvorrichtung (205) dazu angetrieben wird, sich um den Schwenkzapfen (2042) hin und her zu bewegen und sich mit dem Schneidgleitblock (2012) zu bewegen;
und wobei die Schere (202) und die Klemme (204) jeweils von der Schneidantriebsvorrichtung (201) und der Klemmenantriebsvorrichtung (205) dazu angetrieben werden, sich synchron zur Mittellinie zwischen dem festen Werkzeug (302) und dem beweglichen Werkzeug (301) zu bewegen.

2. Hydraulische Formmaschine nach Anspruch 1, **dadurch gekennzeichnet, dass** der Antriebsmechanismus (500) einen hydraulischen Hauptzylinder (501) umfasst; wobei der Körper (100) mit mindestens einer parallel zu der ersten Montagefläche (102) ausgerichteten zweiten Montagefläche (103) versehen ist; und wobei der hydraulische Hauptzylinder (501) an der zweiten Montagefläche (103) des Körpers (100) vorgesehen ist; und wobei eine Achse einer Kolbenstange des hydraulischen Hauptzylinders (501) senkrecht zu der zweiten Montagefläche (103) ausgerichtet ist; und wobei ein Ende der Kolbenstange des hydraulischen Hauptzylinders (501) der ersten Montagefläche (102) zugewandt ist; und wobei das bewegliche Werkzeug (301) an dem Ende der Kolbenstange des hydraulischen Hauptzylinders (501) angeordnet ist.

3. Hydraulische Formmaschine nach Anspruch 2, **dadurch gekennzeichnet, dass** der Antriebsmechanismus (500) weiterhin eine Gleitkomponente (502) umfasst, die zwischen der ersten Montagefläche (102) und der zweiten Montagefläche (103) angeordnet ist; wobei die Gleitkomponente (502) einen Gleitblock (503), eine erste Schiene (504) und eine zweite Schiene (505) umfasst; und wobei zwei Seiten des Gleitblocks (503) jeweils gleitend mit der ersten Schiene (504) und der zweiten Schiene (505) in Eingriff stehen; und wobei die Kolbenstange des hydraulischen Hauptzylinders (501) mit einem Ende des Gleitblocks (503) verbunden ist, und wobei das bewegliche Werkzeug (301) und die erste Ausstoßkomponente (401) an dem anderen Ende des Gleitblocks (503) angeordnet sind.

4. Hydraulische Formmaschine nach Anspruch 3, **dadurch gekennzeichnet, dass** der Körper (100) für die Montage des gesamten Schneidmechanismus (200), des Formwerkzeugs (300), des Ausstoßers (400), des Gleitblocks (503) und des hydraulischen Hauptzylinders (501) konfiguriert ist.

5. Hydraulische Formmaschine nach einem der Ansprüche 1 bis 4, **dadurch gekennzeichnet, dass** der Schneidmechanismus (200) weiterhin ein Schneidwerkzeug (203) umfasst; wobei die Schere (202) mit einem Schermesser (2021) versehen ist, und wobei die Klemme (204) mit einem Klemmabschnitt (2041) versehen ist;
und wobei das Schneidwerkzeug (203) an der ersten Montagefläche (102) vorgesehen und mit einem Fördereinlass (2031) versehen ist, der konzentrisch mit dem Zufuhreinlass (101) angeordnet ist; und wobei ein Bearbeitungsraum an einem Ausgangsende des Fördereinlasses (2031) vorgesehen ist; und wobei die Schere (202) durch die Schneidantriebsvorrichtung (201) dazu angetrieben wird, sich in einer Ebene senkrecht zu einer Achse des Fördereinlasses (2031) hin und her zu bewegen, und wobei der Klemmabschnitt (2041) der Klemme (204) durch die Klemmenantriebsvorrichtung (205) dazu angetrieben wird, sich nahe an das Schermesser (2021) heranzubewegen oder von diesem wegzubewegen; und wobei der Klemmabschnitt (2041) der Klemme (204) und das Schermesser (2021) der Schere (202) von der Klemmenantriebsvorrichtung (205) dazu angetrieben werden, den Rohling in dem Bearbeitungsraum zu klemmen und sich synchron zu einer Position zwischen dem festen Werkzeug (302) und dem beweglichen Werkzeug (301) zum Extrudieren des Rohlings zu bewegen.

6. Hydraulische Formmaschine nach Anspruch 5, **dadurch gekennzeichnet, dass** die Schneidantriebsvorrichtung (201) weiterhin einen Führungsmechanismus (2011) umfasst, wobei der Führungsmechanismus (2011) an der ersten Montagefläche (102) und an einer Seite des Schneidwerkzeugs (203) vorgesehen ist; und wobei eine Führungsrichtung des Führungsmechanismus (2011) senkrecht zu einer Erstreckungsrichtung der Achse des Fördereinlasses (2031) ausgerichtet ist; und wobei der Schneidgleitblock (2012) gleitend mit dem Führungsmechanismus (2011) in Eingriff steht; und wobei und die Schere (202) auf einer Seite des Schneidgleitblocks (2012) nahe dem Schneidwerkzeug (203) angeordnet ist.

7. Hydraulische Formmaschine nach Anspruch 6, **dadurch gekennzeichnet, dass** die Schneidantriebsvorrichtung (201) weiterhin einen hydraulischen Schneidzylinder (2013) umfasst; wobei ein von dem Schneidwerkzeug (203) entferntes Ende des Schneidgleitblocks (2012) mit einer Kolbenstange des hydraulischen Schneidzylinders (2013) verbunden ist.

8. Hydraulische Formmaschine nach Anspruch 1, **dadurch gekennzeichnet, dass** die hydraulische Formmaschine weiterhin ein hydraulisches Steuersystem (700) und ein elektrisches Steuersystem (800) umfasst.

## Revendications

1. Machine de formage hydraulique, comprenant : un corps (100), un mécanisme de coupe (200), une matrice de formage (300), un éjecteur (400) et un mécanisme d'entraînement (500); ledit corps (100) est pourvu d'au moins une première surface de montage (102); ladite matrice de formage (300) comprend une matrice mobile (301) et une matrice fixe (302) adaptées l'une à l'autre; ledit éjecteur (400) comprend un premier composant d'éjection (401) disposé sur un côté de ladite matrice mobile (301) et un second composant d'éjection (402) disposé sur un côté de ladite matrice fixe (302);
ledit corps (100) est pourvu d'une entrée d'alimentation (101) pénétrant dans ladite première surface de montage (102); ledit mécanisme de coupe (200) et ladite matrice fixe (302) sont prévus sur ladite première surface de montage (102) dudit corps (100) et respectivement sur les deux côtés de l'extrémité de décharge de ladite entrée d'alimentation (101); ladite matrice mobile (301) est agencée sur ledit mécanisme d'entraînement (500) et entraînée par ledit mécanisme d'entraînement (500) pour se rapprocher ou s'éloigner de ladite matrice fixe (302) dans une direction perpendiculaire à ladite première surface de montage (102); une ébauche découpée par ledit mécanisme de coupe (200) est extrudée entre ladite matrice fixe (302) et ladite matrice mobile (301);
ledit mécanisme de coupe (200) comprend un dispositif d'entraînement de coupe (201), une cisaille (202), une pince (204) et un dispositif d'entraînement de pince (205); ledit dispositif d'entraînement de coupe (201) comprend un bloc coulissant de coupe (2012); **caractérisé en ce que**
ladite pince (204) est en outre pourvue d'un pivot oscillant (2042) et d'une extrémité d'entraînement (2043); ledit pivot oscillant (2042) est articulé sur une extrémité dudit bloc coulissant de coupe (2012); ladite cisaille (202) est agencée sur ladite extrémité dudit bloc coulissant de coupe (2012); ladite extrémité d'entraînement (2043) est connectée audit dispositif d'entraînement de pince (205); et ladite pince (204) est entraînée par ledit dispositif d'entraînement de pince (205) pour aller et venir autour dudit pivot oscillant (2042) et se déplacer avec ledit bloc coulissant de coupe (2012);
ladite cisaille (202) et ladite pince (204) sont respectivement entraînées par ledit dispositif d'entraînement de coupe (201) et ledit dispositif d'entraînement de pince (205) pour se déplacer de manière synchrone vers la ligne centrale entre ladite matrice fixe (302) et ladite matrice mobile (301).

2. Ladite machine de formage hydraulique selon la revendication 1, **caractérisée en ce que** ledit mécanisme d'entraînement (500) comprend un vérin hydraulique principal (501); ledit corps (100) est pourvu d'au moins une seconde surface de montage (103) parallèle à ladite première surface de montage (102); ledit vérin hydraulique principal (501) est prévu sur ladite seconde surface de montage (103) dudit corps (100); un axe d'une tige de piston dudit vérin hydraulique principal (501) est perpendiculaire à ladite seconde surface de montage (103); une extrémité de ladite tige de piston dudit vérin hydraulique principal (501) fait face à ladite première surface de montage (102); ladite matrice mobile (301) est agencée sur ladite extrémité de ladite tige de piston dudit vérin hydraulique principal (501).

3. Ladite machine de formage hydraulique selon la revendication 2, **caractérisée en ce que** ledit mécanisme d'entraînement (500) comprend en outre un composant coulissant (502) agencé entre ladite première surface de montage (102) et ladite seconde surface de montage (103); ledit composant coulissant (502) comprend un bloc coulissant (503), un premier rail (504) et un second rail (505); deux côtés dudit bloc coulissant (503) sont respectivement engagés de manière coulissante avec ledit premier rail (504) et ledit second rail (505); et ladite tige de piston dudit vérin hydraulique principal (501) est reliée à une extrémité dudit bloc coulissant (503), ladite matrice mobile (301) et ledit premier composant d'éjection (401) sont agencés sur l'autre extrémité dudit bloc coulissant (503).

4. Ladite machine de formage hydraulique selon la revendication 3, **caractérisée en ce que** ledit corps (100) est configuré pour le montage de l'ensemble dudit mécanisme de coupe (200), de ladite matrice de formage (300), dudit éjecteur (400), dudit bloc coulissant (503) et dudit vérin hydraulique principal (501).

5. Ladite machine de formage hydraulique selon l'une quelconque des revendications 1 à 4, **caractérisée en ce que** ledit mécanisme de coupe (200) comprend en outre une matrice de coupe (203); ladite cisaille (202) est pourvue d'une lame de cisaillement (2021), et ladite pince (204) est pourvue d'une partie de serrage (2041);
ladite matrice de découpe (203) est prévue sur ladite première surface de montage (102) et pourvue d'une entrée de transport (2031) agencée concentriquement à ladite entrée d'alimentation (101); un espace de traitement est prévu à une extrémité de sortie de ladite entrée de transport (2031); ladite cisaille (202) est entraînée par ledit dispositif d'entraînement de coupe (201) pour aller et venir dans un plan perpendiculaire à un axe de ladite entrée de transport (2031), ladite partie de serrage (2041) de ladite pince (204) est entraînée par ledit dispositif d'entraînement de pince (205) pour se rapprocher ou s'éloigner de ladite lame de cisaillement (2021); ladite partie de serrage (2041) de ladite pince (204) et ladite lame de cisaillement (2021) de ladite cisaille (202) sont entraînées par ledit dispositif d'entraînement de pince (205) pour serrer ladite ébauche dans ledit espace de traitement et se déplacer de manière synchrone vers une position entre ladite matrice fixe (302) et ladite matrice mobile (301) pour extruder ladite ébauche.

6. Ladite machine de formage hydraulique selon la revendication 5, **caractérisée en ce que** ledit dispositif d'entraînement de coupe (201) comprend en outre un mécanisme de guidage (2011); ledit mécanisme de guidage (2011) est prévu sur ladite première surface de montage (102) et sur un côté de ladite matrice de découpe (203); une direction de guidage dudit mécanisme de guidage (2011) est perpendiculaire à une direction d'extension dudit axe de ladite entrée de transport (2031); ledit bloc coulissant de coupe (2012) est en prise de manière coulissante avec ledit mécanisme de guidage (2011); et ladite cisaille (202) est agencée sur un côté dudit bloc coulissant de coupe (2012) à proximité de ladite matrice de coupe (203).

7. Ladite machine de formage hydraulique selon la revendication 6, **caractérisée en ce que** ledit dispositif d'entraînement de coupe (201) comprend en outre un vérin hydraulique de coupe (2013); et une extrémité dudit bloc coulissant de coupe (2012) éloignée de ladite matrice de coupe (203) est reliée à une tige de piston dudit vérin hydraulique de coupe (2013).

8. Ladite machine de formage hydraulique selon la revendication 1, **caractérisée en ce que** ladite machine de formage hydraulique comprend en outre un système de commande hydraulique (700) et un système de commande électrique (800).
